# EUROPEAN PATENT APPLICATION

(11) **EP 1 629 972 A1**
(43) Date of publication of application: **01.03.2006**
(21) Application number: 04077424.2
(22) Date of filing: 27.08.2004
(51) Int. Cl.: B32B 27/30, B32B 27/12, B32B 27/18

(54) **Antistatic heat resistant barrier laminate**

(71) Applicant: KE-BURGMANN A/S, DK-6600 Vejen (DK)
(72) Inventor: Uffe, Toft, 6630 Rodding (DK)
(74) Representative: Elmeros, Claus

(57) **Abstract**

According to the invention, a laminate of fluoropolymer film materials is provided. In particular, the film materials are unsintered, impermeable PTFE films, said films being expanded (ePTFE) or unexpanded. The foils may be mounted on a woven fabric. The fabric reinforced laminate may have one or more films on either one side of the fabric or on both sides of the fabric. Hereby, an antistatic as well as chemically and heat-resistant barrier laminate is provided.

## Description

The present invention relates to chemical and heat resistant barrier laminate for use as lining or the like in a hazardous locations, such as compartments, e.g. rooms, pipe lines, ducts or flow channels involving an explosion hazard.

Electrostatic charging of objects may present a problem in many installations, e.g. floors, covers, clothing, packaging materials as well as transport of dry medias in pipe lines and the like.

The static electricity may in some cases be a health hazard for humans and animals, and in some cases it may be dangerous in relation to locations involving an explosive hazard, e.g. where volatile, flammable liquids are present or where there is a danger of dust explosions or other kinds of explosions, that may occur in a location when a spark is produced due to a discharge of a static electricity charged object.

Impermeable fluoropolymer laminates, with or without fabric reinforcement, are used as barrier lining material for protection against aggressive medias, i.e. gas or liquid fluids, such as in connection joints, in particular expansion joints, in pipe structures, in flue gas installations or the like. It is common to fit a plurality of layers as an inner lining in order to create and to secure a tight connection joint in order to keep the aggressive fluids, such as hot gasses or humid condensates, inside the pipe structures. The fluoropolymer laminates, in particular PTFE laminates can resist high temperatures and can be cleaned by aggressive chemicals without being damaged.

The laminates may be made of PTFE (polytetrafluoroethylene) films, which are advantageously as they can withstand extremely high temperatures, more than 220°C. Examples of such laminates are known from WO99/07551. However, although the laminates of such kind are chemically resistant and can withstand high temperatures in excess of 220°C, the known barrier laminates have certain disadvantages since they may be electrostatically charged which may prove potentially dangerous.

It is the object of the invention to provide a chemically and heat resistant barrier laminate which has antistatic properties in order to reduce or even eliminate the above-mentioned disadvantages.

This object is achieved by a laminate according to claim 1 or claim 8.

According to the invention, a laminate of fluoropolymer film materials is provided. In particular, the film materials are unsintered, impermeable PTFE films, said films being expanded (ePTFE) or unexpanded. The foils may be mounted on a woven fabric. The fabric reinforced laminate may have one or more films on either one side of the fabric or on both sides of the fabric.

The unsintered fluoropolymer films that are used in a laminate according to the invention are electrically conductive foils, whereby static electricity of the laminate, i.e. the surface of the lining in a location, may be discharged and thereby prevent igniting volatile fumes or other hazardous substances in the location, e.g. in a flue gas pipe line, in a painting cabin, etc. Thus, the laminate is provided with antistatic properties. The electrically conductive unsintered films are manufactured of PTFE with selected substances therein, such as antistatic powder particles, colouring material or the like, e.g. carbon black powder, retaining the conductive property also after the films are sintered in the lamination process.

The impermeable laminates according to the invention are produced for use in environments and lining of rooms where a potential explosion hazard exist due to build up of static electricity and for use in soft connections, i.e. in expansion joints, for absorbing thermal, physical and other movements in pipe lines and flow channels where static electricity may occur because of a gas or liquid flow. By the term impermeable is meant a non-porous film material capable of preventing gasses or liquids from penetrating through the barrier laminate.

The advantage of using fluoropolymer laminates is that the surface, preferably a PTFE surface presents a non-stick surface. Moreover, these films are flexible and can withstand high temperatures just as these materials are resistant against most aggressive materials. A laminate according to the invention is accordingly suitable for use in flow channels or similar constructions where aggressive and explosion hazardous materials are present and can withstand temperatures of up to 300°C.

By the invention, it is realised that a laminate according to the invention may be used for covering the floor, the walls and/or the ceiling of rooms where a explosion hazard is present due to static electricity, such as painting cabins and the like.

According to the invention, the laminate may comprise one or more films with a reinforcing woven fabric. A laminate according to this embodiment may be provided with an "open" back side, so that a PTFE film is only laminated to the first side of the fabric. By applying an adhesive to the back side, a laminate of such kind may be mounted on walls and machine parts in locations which are to be cleaned by volatile fumes, where a high amount of dust is present or other circumstances making the location hazardous if a electro-static spark is ignited.

In an advantageous aspect of the invention, the static electricity is discharged in the innermost PTFE layer through the outermost layer by using a specially woven fabric where at least one thread in the one or more of the yarns is provided with a thin conductive thread which is provided during the production of the yarn. The electrically conductive thread is undulating in the glass fabric and will emerge on the surface of the fabric at numerous positions, which provides the woven fabric with numerous locations where a conductive contact is established between the conductive PTFE surfaces for discharging.

The woven fabric may be a glass fibre woven fabric, a carbon fibre fabric or a Kevlar fabric. Of cause other suitable reinforcement fabrics may be used.

In the following the invention is described with reference to some preferred embodiments and the accompanying drawings, in which:
Figures 1 to 4 are schematic cross-section views of four embodiments of a laminate according to the invention; and
Figures 5 and 6 are schematic views of measurement systems for testing the conductivity of a laminate.

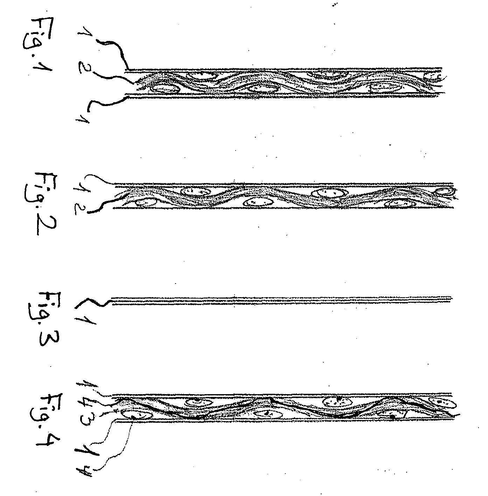

In figure 1 a first embodiment of a laminate according to the present invention is schematically shown. In this embodiment, a layer of conductive PTFE foil 1 is laminated onto each side of a woven fabric 2, such as a glass fibre fabric. The layers of PTFE foil 1 on each side of the reinforcing fabric in the laminate may consist of one or more conductive PTFE foils.

A laminate according to this embodiment may be used for expansion joins, lining of flue gas ducts, wall covering of exposed machine parts in a production facility or the like. In an embodiment, a glass fabric of 50 - 3000 g/m², preferably 700 g/m² is used. The PTFE films have a thickness of 0.02 - 2.0 mm and are provided with antistatic materials, such as small particles of carbon black with particle sizes of less than 10 µm.

In fig. 2 a second embodiment of a fabric reinforced laminate according to the invention is shown. According to this embodiment, the fabric 2 is only provided with a PTFE foil 1 layer on the first side and the second side - the back side - is left "open". This makes this laminate particularly suitable for use where the laminate needs to be bonded to another material by being positioned by an adhesive, e.g. by applying vulcanised rubber to the open surface.

In fig. 3, a PTFE barrier laminate is shown without fabric reinforcement, but simple two or more foils of conductive PTFE laminated together. The number of foils and the properties of each of the foils may be chosen in accordance with the actual use of the laminate. A laminate of this type may typically be used in expansion joins or ducts where dry powder or pellets are transported.

In fig. 4, a fourth embodiment is shown. In this embodiment the woven fabric 2 is provided with a conductive thread 4, e.g. a metal wire that is provided in a yarn 3 of the fabric 2. A number of wires 4 in some or all of the yarns 3 may be provided in order to establish a conductive contact between the layer of conductive PTFE foils on each side of the fabric.

The method of manufacture of the laminate that may be used is described in WO99/07551 belonging to a prominent laminate producer.

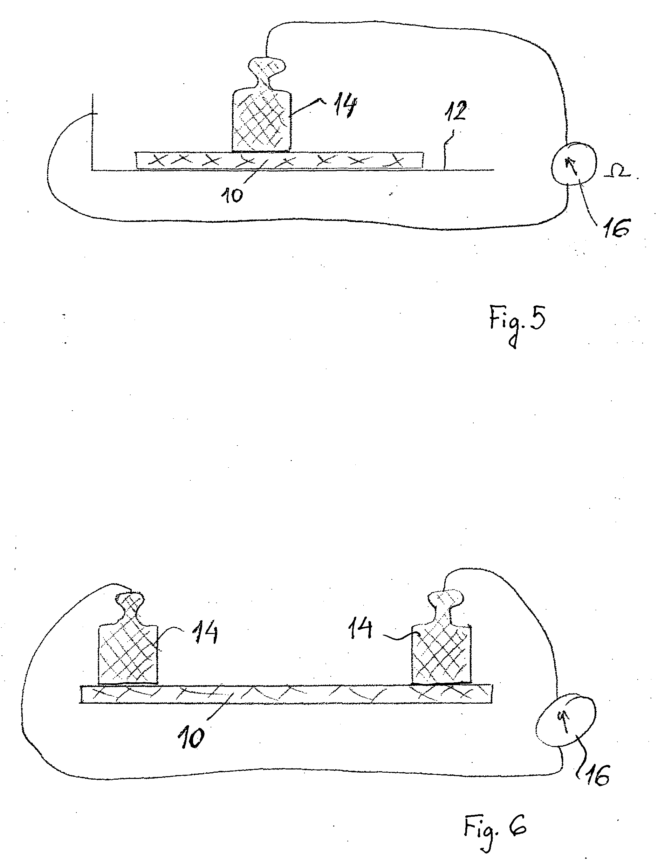

In figures 5 and 6, conductivity measurement test rigs are shown schematically. This method of measurement follows the international standards for measurement of static electricity, e.g. the ANSI/ESC norms.

In fig. 5, a first measurement test rig is shown. The laminate 10 is placed on a conductive plate 12. A probe 14 is placed on top of the laminate and the electrical resistance between the probe 14 and the conductive plate 12 is measured by the measurement device 16.

In fig. 6, a second measurement test rig is shown. In this measurement rig, two probes 14 are placed on the laminate 10 at a certain distance specified in the international standards for measuring antistatic properties. The surface resistance in the laminate 10 between the probes 14 is measured by a measuring device 16.

For considering a material to be conductive, the material must be within the limits of more than 1x10⁴ Ω and less than 1x10⁸ Ω when measuring between a probe and the ground at a applied voltage of 100 V DC, as shown in fig. 5.

Moreover, the measurements according to the method shown in fig. 6, i.e. between two probes placed on the surface of the material at a distance of 250 mm must be more than 1x10⁴ Ω and less than 1x10¹⁰ Ω in surface resistance when a voltage of 100 V DC is applied.

These limits and the measurement methods are described in ANSI/ESD 4.1-1990, ANSI/ESD 20.20-1999 and DIN51953 and EN/ICE61340. When the conductive resistance is found to be within the upper limits defined in these Standards, the material is considered to be conductive and may be used as antistatic materials in electro-static chargeable locations, when the materials grounded or are connected to a grounded construction or other electrically conductive constructions.

The conductive PTFE films that are used in a laminate according to the invention have an electrical resistance of 1x10⁵ Ω, compared to a measurement of 10x10¹¹ Ω for "normal" PTFE film with no conductive substance added. In the table below, the electrical conductivity measured for some laminates according to the invention:

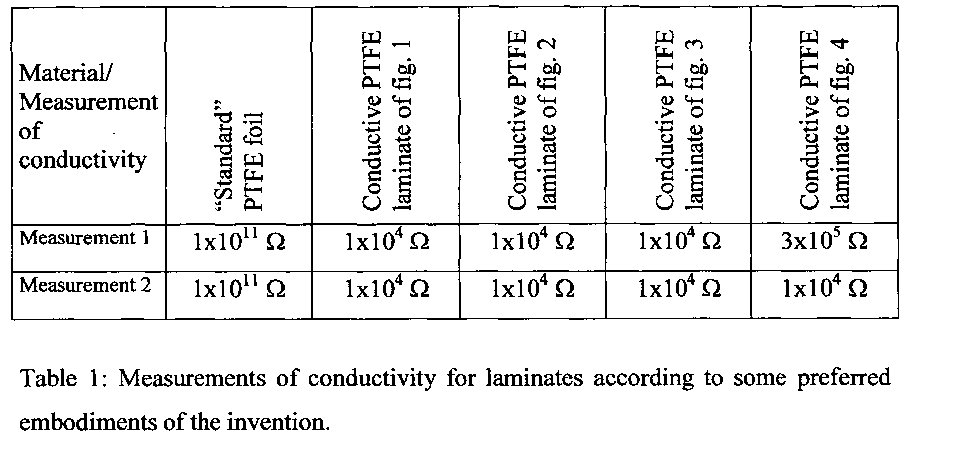

The PTFE films are made conductive during their manufacture by adding a conductive or antistatic substance. The powdered conductive substance is added and mixed in the virgin PTFE powder before being made as a paste. When the paste is made, said PTFE paste is pressed through a paste extruder and calendered into a film or foil having a predetermined thickness between 0.025 - 2 mm, preferably 0.1 mm. The foils are then sintered in the lamination process either by plate pressing or pressing through one or more sets of rollers.

The use of a glass fibre fabric is advantageous since this woven material can withstand temperatures in excess of 400 °C during the sintering of the laminates. However, other types of heat resistant fabrics may be used, such as carbon fibre or Kevlar fibre fabrics.

The laminate is connected to an earth connection or a suitable electronic unit for removal of the electro-static charging on laminate surface.

## Claims

1. A chemically and heat resistant barrier laminate comprising at least two fluoropolymer films which are joined together, at least one of said films are provided with a conductive substance.

2. A laminate according to claim 1, wherein the fluoropolymer films are PTFE films.

3. A laminate according to claim 1 or 2, wherein the conductive substance is a carbon powder material or other conductive powder substances, which are absorbed in the PTFE film material.

4. A laminate according to any of claims 1 to 3, wherein the joined films are laminated to a heat resistant woven fabric.

5. A laminate according to claim 4, wherein woven fabric is a glass fibre fabric, preferably provided with at least one conductive thread intermeshed in the fabric, preferably provided in at least one of the yarns in the fabric.

6. A laminate according to claim 4, wherein the woven fabric is a carbon fibre fabric.

7. A laminate according to claim 4, wherein the woven fabric is a Kevlar based fabric.

8. A chemically and heat resistant barrier laminate comprising at least one flouropolymer film and a heat resistant woven fabric having a first and second side, where the at least one fluoropolymer film is laminated to at least first side of said woven fabric, **characterised in that** the at least one fluoropolymer film is provided with a conductive substance.

9. A laminate according to claim 8, wherein the woven fabric is provided with at least one conductive wire intermeshed in the woven fabric.

10. A laminate according to claim 8 or 9, wherein a second fluoropolymer film is laminated onto the second side of the woven fabric.

11. A laminate according to any of claim 8 to 10, wherein the fluoropolymer films are PTFE films.

12. A laminate according to any of claims 8 to 11, wherein the conductive substance is a carbon powder material or other conductive powder substances, which are absorbed in the PTFE film material.

13. A laminate according to any of claims 8 to 12, wherein the woven fabric is a glass fibre fabric.

14. A laminate according to any of claims 8 to 12, wherein the woven fabric is a carbon fibre fabric.

15. A laminate according to any of claims 8 to 12, wherein the woven fabric is a Kevlar based fabric.
